# EUROPEAN PATENT APPLICATION

(11) **EP 4 822 566 A1**
(43) Date of publication of application: **14.10.2026**
(21) Application number: 25168876.8
(22) Date of filing: 07.04.2025
(51) Int. Cl.: G06F 21/10

(54) **RISK-BASED LICENSING SYSTEM FOR EDGE COMPUTING ENVIRONMENTS**

(71) Applicant: Siemens Aktiengesellschaft, 80333 München (DE)
(72) Inventor: Kehoe, Benjamin Robert, 90419 Nürnberg (DE); Scholz, Andreas, 85635 Höhenkirchen-Siegertsbrunn (DE); Setia, Chintan Singh, 91301 Forchheim (DE)
(74) Representative: Siemens Patent Attorneys

(57) **Abstract**

The present disclosure provides a computer-implemented method for risk-based software licensing. The method includes receiving a license request from an application, collecting context information related to the license request, assessing trustworthiness of context data providers, performing a risk assessment (108) based on the collected context information and trust assessment, determining whether to grant the license (110) based on the risk assessment, generating and tuning license content (112) if the license is granted or generating a license denial response (114) if the license is not granted, encoding and signing (116) the adjusted license content or denial response, and returning the response (118) to the requesting application (315). The context information includes device information, application configuration data, and environment information.

## Description

The present disclosure relates to software licensing systems, and more particularly to a risk-based licensing system for applications running in edge computing environments.

### BACKGROUND

Software licensing management has become increasingly complex in modern computing environments, particularly in edge and cloud-based systems. As organizations deploy applications across a diverse array of devices and platforms, traditional licensing models face challenges in accurately tracking and enforcing software usage.

As used herein, the term "software license" may refer to a legal agreement that grants permission to use, modify, or distribute software under specified conditions, typically including terms of use, restrictions, and obligations for the licensee. The term "edge" may refer to computing resources and infrastructure located closer to end users and data sources, as opposed to centralized cloud data centers. Edge computing environments may include devices, sensors, gateways, and local servers that process and analyze data near its point of origin. Edge devices may range from loT sensors and mobile phones to industrial controllers and autonomous vehicles. The edge can be considered part of a distributed computing topology where information processing is situated closer to the physical location where things and people produce or consume that information. In some aspects, edge computing aims to reduce latency, conserve network bandwidth, and enable operations in environments with limited connectivity.

Existing licensing solutions for desktop software typically bind licenses to specific hardware identifiers or employ network-based checkout systems for more flexible assignment. However, these approaches often rely on static decision-making processes that may not adequately address the dynamic nature of contemporary computing infrastructures.

In edge environments, the variety of devices and applications presents licensing challenges. The trustworthiness of different components can vary significantly, with some possessing robust security mechanisms while others may be more susceptible to unauthorized use. In edge computing environments, the trustworthiness of different components can vary significantly, impacting the reliability of software licensing mechanisms. Some devices possess robust security features, such as Trusted Platform Modules (TPM), which make it difficult to misuse licenses or circumvent licensing controls. In contrast, other components, particularly virtual machines, may present challenges for license enforcement due to their ease of cloning and replication, potentially enabling unauthorized software use without proper payment or authorization. Additionally, the relationships between device providers and software vendors within the ecosystem can impact licensing considerations. If both come from the same party there might be a high trust. Quite the contrary might be true if a very expensive App should be executed on a new type of device that has just recently been added to the ecosystem; in this case the App provider might want to be more restrictive with licensing decisions to ensure the App cannot be easily used without paying due to a security weakness of the new device type.

Cloud environments further complicate licensing management due to the frequent provisioning and deprovisioning of virtual machines. Software instances may appear and disappear rapidly, making it difficult for conventional scanning techniques to maintain an accurate inventory of deployed applications. Existing licensing solutions for desktop software may work by binding licenses to some hardware identifiers (MAC addresses, CPU Ids, etc). If the application / license gets move to a different device, the application can detect that it is intended for a different system and will reject it.

Current licensing systems often struggle to provide fine-grained, context-specific decisions that can adapt to changing circumstances. This limitation can lead to inefficiencies in license utilization and potential compliance risks for organizations.

There is a growing need for licensing solutions that can accommodate the complexities of modern computing environments. Such solutions should be capable of making dynamic, risk-based licensing decisions that consider factors such as device characteristics, application configurations, and ecosystem relationships.

One approach to addressing these challenges involves leveraging information generated through computing infrastructure management processes. By analyzing data collected during routine system operations, it may be possible to gain more accurate insights into software usage patterns and licensing requirements.

A system described in U.S. Patent 8,997,242 presents a method for software license management that intercepts computing system service requests and analyzes them to determine potential changes in license usage. This approach examines stored software information, including instance type data, to identify software usage changes such as virtual machine provisioning or deprovisioning. The system then maps these changes to licensing models and consumption values, considering stored license information and rule sets.

While such systems represent progress in the field of license management, there remains room for improvement in addressing the full spectrum of challenges posed by edge and cloud computing environments. As the complexity of software deployments continues to increase, so too does the need for more sophisticated and adaptable licensing solutions.

The described problems are solved by a method according to the feaatures of claim 1 Further they are solved by a risk-based licensing system according to claim 8 and a method for processing a license request, according to claim 15.

In a first aspect, a method for risk-based software licensing is provided. The method comprises: receiving a license request from an application; collecting context information related to the license request, wherein the context information includes device information, application configuration data, and environment information; assessing trustworthiness of context data providers; performing a risk assessment based on the collected context information and trust assessment; determining whether to grant the license based on the risk assessment; generating and tuning license content if the license is granted, or generating a license denial response if the license is not granted; encoding and signing the adjusted license content or denial response; and returning the response to the requesting application.

As used herein, the term "risk" may refer to the potential for unauthorized use, misuse, or non-compliance associated with granting a software license in a particular context. Risk in software licensing may encompass factors such as the likelihood of license terms being violated, the potential for software piracy or unauthorized distribution, the possibility of security breaches or data compromises, and the financial or operational impact of improper software usage. In some aspects, risk assessment in licensing decisions may consider the trustworthiness of devices, the reliability of the computing environment, the nature of the application, and the overall context in which the software will be used. In the context of risk-based software licensing, risk assessment refers to the process of evaluating potential security threats, compliance issues, and operational challenges associated with granting a software license. This assessment may consider various factors such as the trustworthiness of the device and environment, the nature of the application, historical usage patterns, and the overall context of the license request. The outcome of the risk assessment may be used to determine whether to grant a license, as well as to adjust license parameters such as duration, feature access, or usage restrictions based on the perceived level of risk.

This risk-based software licensing method allows for dynamic and context-aware licensing decisions, improving security and flexibility in complex edge computing environments where traditional static licensing approaches may be inadequate.

The method may further comprise collecting device information using a device information collector; collecting application configuration data using an application configuration collector; and collecting environment information using an environment information collector.

By utilizing specialized collectors for different types of context information, the method ensures comprehensive and accurate data gathering, which is crucial for making informed licensing decisions.

The method may further comprise digitally signing the collected context information.

Digital signing of collected context information enhances the security and integrity of the licensing process, allowing for verification of the data's authenticity and source.

The method may further comprise determining whether intermediaries are involved in the license request process; and if intermediaries are present, adding and signing intermediary context information. As used herein, "intermediaries" may refer to entities or components that facilitate communication between the application requesting a license and the licensing server. These intermediaries may include network devices, proxy servers, gateways, or other software or hardware components that process, relay, or modify license requests and responses as they traverse the network. In some aspects, intermediaries may add additional context information to license requests, such as network characteristics, security protocols, or other relevant data that can influence the risk assessment and licensing decision process.

Incorporating intermediary context information provides a more complete picture of the licensing environment, accounting for potential security risks or trust factors introduced by intermediaries in the request chain.

In a second aspect, a risk-based licensing system is provided. The system comprises: a context collection module configured to collect context information related to a license request, the context collection module including a device information collector, an application configuration collector, and an environment information collector; a trust assessment module configured to assess trustworthiness of context data providers; a risk assessment module configured to perform a risk assessment based on the collected context information and trust assessment; and a license generation module configured to generate and tune license content based on the risk assessment.

This risk-based licensing system provides a comprehensive and modular approach to software licensing, allowing for flexible and adaptive licensing decisions based on various contextual factors and risk assessments.

The context collection module may be further configured to digitally sign the collected context information.

Digital signing of collected context information by the system enhances the overall security and trustworthiness of the licensing process, providing a verifiable chain of data provenance. The step of digital signature in the context of risk-based software licensing may involve several techniques and processes. some known examples may be a PKI structure, a Hash based signature, XML or JSON Web signature, to name a few.

The trust assessment module may be configured to evaluate digital signatures associated with each piece of context information; and determine a trustworthiness level for each context data provider based on the evaluation. The trustworthiness level may refer to a quantitative or qualitative measure of confidence in the reliability, authenticity, and integrity of various components involved in the licensing process. Factors that may influence the trustworthiness level include: Device security features, Software integrity including runtime checks, network security, like VPN usage, historical behavior, strength of authentication methods, update status etc. which will be also elaborated in the following.

By evaluating the trustworthiness of context data providers, the system can make more informed licensing decisions, taking into account the reliability and credibility of the information sources.

The risk assessment module may be configured to analyze the collected context information and trust assessment; and generate a risk score based on the analysis.

Generating a risk score allows for quantifiable and consistent decision-making across different licensing scenarios, improving the overall reliability and fairness of the licensing process.

The license generation module may be configured to adjust at least one of: license expiration time, optional feature licenses, or license behavior parameters based on the generated risk score.

This adaptive license generation capability allows for fine-tuned control over license terms, enabling the system to balance security concerns with user needs based on the assessed risk level.

In a third aspect, a method for processing a software license request is provided. The method comprises: initiating a license request from an application; collecting device information related to the license request; adding application configuration data to the request; including environment information in the request; signing the collected context information; determining whether intermediaries are involved in the request process; if intermediaries are present, adding and signing intermediary context information; and sending the request with all collected context to a licensing server.

This method for processing software license requests ensures that all relevant contextual information is gathered, signed, and securely transmitted to the licensing server, enabling more informed and secure licensing decisions.

The method may further comprise gathering hardware specifications of a device running the application; and identifying security features present on the device.

Collecting detailed device information allows for more accurate risk assessment and licensing decisions, taking into account the specific hardware capabilities and security features of the device requesting the license.

The method may further comprise determining version information of the application; and identifying specific features or modules of the application that require licensing.

By including detailed application information in the license request, the method enables more granular and flexible licensing options, allowing for feature-specific licensing based on the application's capabilities and configuration.

The method may further comprise identifying network characteristics of the environment in which the application is running; and determining the presence of other licensed applications in the same environment.

Considering the broader environment in which the application operates provides valuable context for assessing potential security risks and licensing requirements, leading to more informed licensing decisions.

The foregoing general description of the illustrative embodiments and the following detailed description thereof are merely exemplary aspects of the teachings of this disclosure and are not restrictive.

### BRIEF DESCRIPTION OF FIGURES

Non-limiting and non-exhaustive examples are described with reference to the following figures.
FIG. 1 illustrates a flowchart for a method of processing a license request, according to aspects of the present disclosure.
FIG. 2 illustrates a flowchart for a method of gathering context information for a license request, according to an embodiment.
FIG. 3 illustrates a block diagram of a risk-based licensing system, according to aspects of the present disclosure.

The following description sets forth exemplary aspects of the present disclosure. It should be recognized, however, that such description is not intended as a limitation on the scope of the present disclosure. Rather, the description also encompasses combinations and modifications to those exemplary aspects described herein.

A risk-based licensing system addresses the challenges of software licensing in edge computing environments by providing flexible, context-aware licensing decisions. The risk-based licensing system comprises several interconnected modules that work together to process license requests and generate appropriate responses.

A context collection module is configured to collect context information related to a license request. This module includes a device information collector, an application configuration collector, and an environment information collector. These collectors gather various types of data, including information about the device running the application, the application's configuration, and the surrounding environment. The environment information can include details about neighbors in the network, providing a comprehensive view of the operational context.

A trust assessment module is configured to assess the trustworthiness of context data providers. This assessment helps ensure the reliability of the collected information, which is important for making informed licensing decisions.

A risk assessment module is configured to perform a risk assessment based on the collected context information and trust assessment. This module analyzes the gathered data to determine the level of risk associated with granting a license in the given context.

A license generation module is configured to generate and tune license content based on the risk assessment. This module can adjust various parameters of the license, such as expiration time or feature availability, in response to the assessed risk level.

The risk-based licensing system further comprises a licensing server configured to host the system. This server acts as the central point for processing license requests and issuing responses.

One or more intermediaries can be configured to facilitate communication between the licensing server and an application requesting a license. These intermediaries can add and sign additional context information to the license request, further enriching the data available for decision-making.

By incorporating these components, the risk-based licensing system can adapt to the diverse and dynamic nature of edge computing environments, providing more nuanced and appropriate licensing decisions based on the specific context of each request.

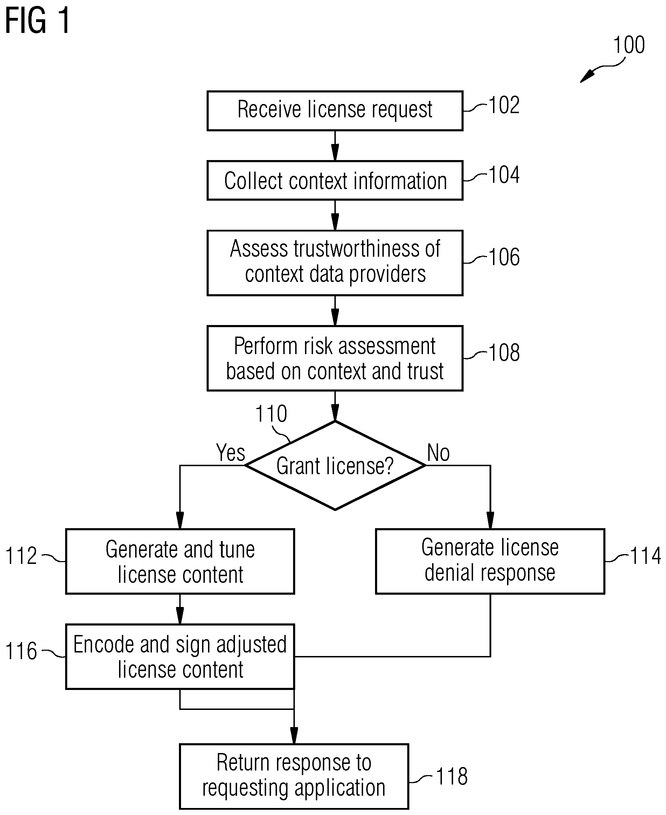

The risk-based software licensing method 100 provides a comprehensive approach for processing license requests in dynamic computing environments. FIG. 1 illustrates a flowchart of the method 100, which begins with step 102 where a license request is received from an application.

In step 104, the method 100 collects context information related to the license request. This context information includes device information, application configuration data, and environment information. The collection of this diverse set of data allows for a more nuanced understanding of the licensing environment.

Following the context collection, step 106 involves assessing the trustworthiness of context data providers. This assessment helps ensure the reliability of the collected information, which is crucial for making informed licensing decisions.

Step 108 of the method 100 performs a risk assessment based on the collected context information and trust assessment. This risk assessment takes into account various factors to determine the level of risk associated with granting a license in the given context.

Based on the risk assessment, step 110 determines whether to grant the license. If the decision is to grant the license, the method 100 proceeds to step 112, where license content is generated and tuned. This tuning process may involve adjusting parameters such as expiration time or feature availability based on the assessed risk level.

Alternatively, if the decision is not to grant the license, the method 100 moves to step 114, where a license denial response is generated. This ensures that appropriate feedback is provided even when a license request is denied.

In step 116, the method 100 encodes and signs the adjusted license content or denial response. This step helps maintain the integrity and authenticity of the licensing decision.

Finally, in step 118, the method 100 returns the response to the requesting application. This completes the licensing process, providing the application with either the granted license or a denial notification.

The method 100 can support various ways for transferring license requests and responses. These may include network-based communications, user interface-based workflows where users enter keys, email-based systems, or even physical media such as USB sticks. This flexibility allows the method 100 to adapt to different operational requirements and constraints.

By implementing these steps, the risk-based software licensing method 100 provides a robust and adaptable approach to software licensing. The method 100 can be implemented as a computer program product, allowing for efficient deployment and execution in various computing environments.

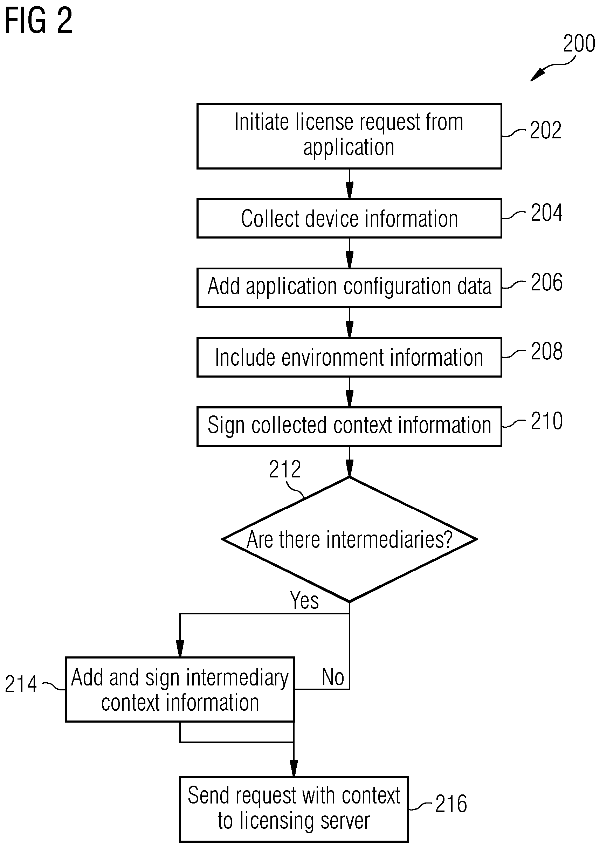

FIG. 2 illustrates a flowchart for a method 200 of processing a software license request. The method 200 begins with a step 202 where a license request is initiated from an application 315. This step marks the beginning of the licensing process, triggered by the application 315 seeking authorization to operate.

Following the initiation, a step 204 involves collecting device information related to the license request. This collection process includes gathering hardware specifications of a device running the application 315. Additionally, the device information collector 304 identifies security features present on the device. These details provide a comprehensive overview of the hardware environment in which the application 315 is operating.

The method 200 then proceeds to a step 206, where application configuration data is added to the request. This step comprises determining version information of the application 315 and identifying specific features or modules of the application 315 that require licensing. By including this information, the licensing system can make more informed decisions based on the specific configuration and requirements of the application 315.

In a step 208, the method 200 includes environment information in the request. This step involves identifying network characteristics of the environment in which the application 315 is running. The process of identifying network characteristics comprises determining network security protocols in use and identifying the type of network connection (e.g., wired, wireless, cellular). Furthermore, this step includes determining the presence of other licensed applications in the same environment, providing context about the broader software ecosystem.

After gathering the necessary information, the method 200 proceeds to a step 210, where the collected context information is signed. This signing process helps ensure the integrity and authenticity of the gathered data. Additionally, the method 200 assigns a trust score to the collected context information based on the identified network characteristics and security features of the device.

The method 200 then reaches a decision point at a step 212, where a determination is made whether intermediaries 316 are involved in the request process. If intermediaries 316 are present, the process moves to a step 214, where intermediary context information is added and signed. This additional information from intermediaries 316 can provide further context and verification for the license request.

Finally, in a step 216, the request with all collected context is sent to a licensing server 317. This step completes the process of preparing and submitting the license request with comprehensive contextual information, enabling the licensing server 317 to make an informed decision based on the rich set of data provided.

By implementing these steps, the method 200 ensures a thorough collection and verification of contextual information for each license request, supporting a more nuanced and adaptive licensing process.

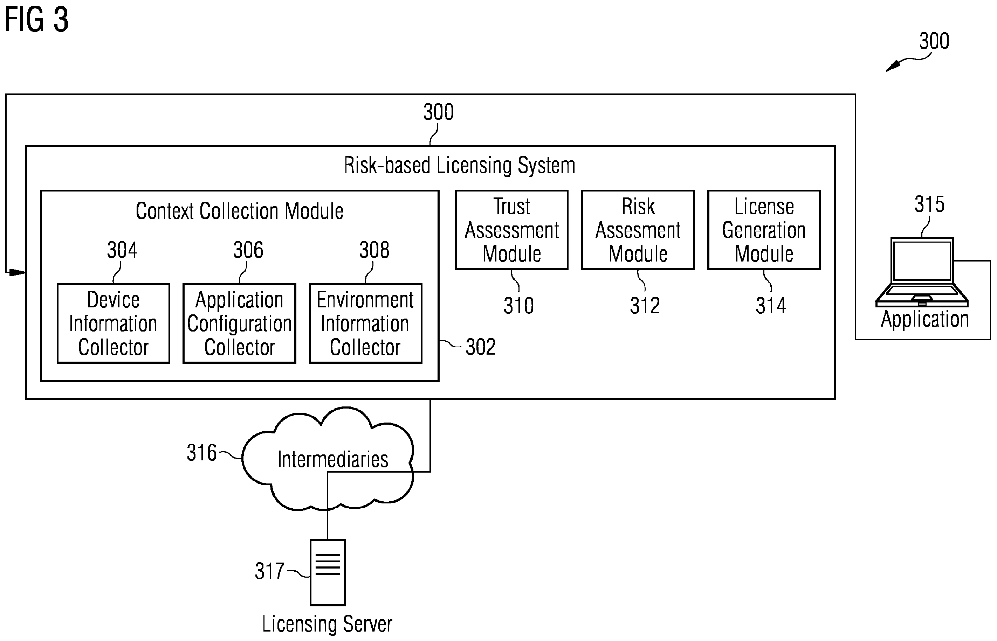

A risk-based licensing system 300 comprises several interconnected modules that work together to process license requests and generate appropriate responses. FIG. 3 illustrates a block diagram of the risk-based licensing system 300.

A context collection module 302 is configured to collect context information related to a license request. The context collection module 302 includes a device information collector 304, an application configuration collector 306, and an environment information collector 308. The device information collector 304 gathers data about the device running the application 315. The application configuration collector 306 collects configuration data from the application 315, including version information and specific features or modules that require licensing. The environment information collector 308 gathers data about the surrounding environment, such as network characteristics and the presence of other licensed applications.

A trust assessment module 310 is configured to assess the trustworthiness of context data providers. The trust assessment module 310 evaluates the digital signatures associated with the collected context information to determine the reliability of the data sources.

A risk assessment module 312 is configured to perform a risk assessment based on the collected context information and trust assessment. The risk assessment module 312 analyzes the gathered data to determine the level of risk associated with granting a license in the given context.

A license generation module 314 is configured to generate and tune license content based on the risk assessment. The license generation module 314 can adjust various parameters of the license, such as expiration time or feature availability, in response to the assessed risk level. The risk-based licensing system 300 may be hosted on the licensing server 317, which acts as the central point for processing license requests and issuing responses. Between the application 315 and the risk-based licensing system 300, there may be intermediaries 316. These intermediaries 316 can add and sign additional context information to the license request, further enriching the data available for decision-making.

The method 200 determines whether intermediaries 316 are involved in the license request process. If intermediaries 316 are present, the method 200 adds and signs intermediary context information. This additional information from intermediaries 316 can provide further context and verification for the license request.

By incorporating these components, the risk-based licensing system 300 can adapt to diverse computing environments, providing context-aware licensing decisions based on the specific circumstances of each request.

The context collection module 302 of the risk-based licensing system 300 collects various types of information related to a license request. The device information collector 304 gathers data about the device running the application, such as hardware specifications and security features. The application configuration collector 306 obtains configuration data from the application, including version information and specific features or modules that require licensing. The environment information collector 308 gathers data about the surrounding environment, such as network characteristics and the presence of other licensed applications.

The context collection module 302 is further configured to digitally sign the collected context information. This digital signature process helps ensure the integrity and authenticity of the gathered data, providing a basis for subsequent trust assessment.

The trust assessment module 310 of the risk-based licensing system is configured to evaluate digital signatures associated with each piece of context information. By examining these digital signatures, the trust assessment module can verify the source and integrity of the collected data.

The trust assessment module 312 determines a trustworthiness level for each context data provider based on the evaluation of digital signatures. This assessment process allows the risk-based licensing system to gauge the reliability of different sources of context information.

An important aspect of the trust assessment process is that the trust assessment module 312 can evaluate trustworthiness in relation to specific data elements. In this approach, the same provider might have different trustworthiness levels for different pieces of data. For example, a provider may be considered highly trustworthy for hardware-related information but less trustworthy for network-related data.

The method implemented by the risk-based licensing system includes steps for evaluating digital signatures associated with each piece of context information. This evaluation process forms the basis for determining the trustworthiness of the collected data.

Following the evaluation of digital signatures, the method determines a trustworthiness level for each context data provider based on the evaluation. This step allows the risk-based licensing system to assign varying levels of confidence to different sources of context information, which can be used in subsequent risk assessment and licensing decisions.

By incorporating these context collection and trust assessment processes, the risk-based licensing system can gather comprehensive information about the licensing environment while also evaluating the reliability of that information. This approach enables more informed and nuanced licensing decisions based on both the content and the trustworthiness of the collected context data.

The risk assessment module 312 analyzes the collected context information and trust assessment to evaluate the risk associated with granting a license. The risk assessment module generates a risk score based on this analysis. The risk assessment module can utilize various approaches to perform the risk assessment and generate the risk score.

In some examples, the risk assessment module 312 uses rule sets defined by an operator to make licensing decisions. These rule sets can be predefined criteria that specify how different context factors and trust levels should be weighted and combined to determine the overall risk. In other examples, the risk assessment module 312 employs rule sets that are automatically learned by the system. This approach allows the risk assessment module to adapt and refine decision-making criteria over time based on observed patterns and outcomes.

The risk assessment module 312 can also incorporate artificial intelligence (AI) technologies to make licensing decisions. AI algorithms can be trained on historical licensing data to identify complex relationships between context factors, trust levels, and appropriate licensing outcomes. Based on the risk score generated by the risk assessment module 312, the license generation module 314 creates and adjusts the license content. The license generation module is configured to modify various license parameters in response to the assessed risk level.

The license generation module 314 can adjust the license expiration time based on the risk score. For higher risk scenarios, the license generation module may set a shorter expiration time to allow for more frequent reassessment of the licensing conditions.

Optional feature licenses can also be adjusted by the license generation module 314. Depending on the risk assessment, certain optional features may be enabled or disabled in the generated license.

The license generation module 314 can modify license behavior parameters as well. These parameters may control aspects such as usage limitations, monitoring frequency, or required check-ins with the licensing server. To determine specific adjustments to license parameters, the license generation module can employ various methods. In some examples, the license generation module uses mathematical models or algorithms for calculating individual license parameters based on the risk score and other relevant factors.

The license generation module 314 can also utilize operator-defined templates for parameter generation. These templates may specify how different risk levels should correspond to specific license configurations.

In other examples, the license generation module 314 incorporates Al technologies for parameter generation. Machine learning models can be trained to optimize license parameters based on historical data and desired outcomes.

By combining the risk assessment capabilities of the risk assessment module 312 with the flexible license generation features of the license generation module 314, the risk-based licensing system can produce context-aware and risk-appropriate licensing decisions. This approach allows for fine-tuned control over license terms based on the specific circumstances of each license request.

The risk-based licensing system 300 interacts with various external components to facilitate the licensing process. A primary external component is the application 315 requesting a license. The application 315 initiates the licensing process by sending a license request to the risk-based licensing system 300.

The risk-based licensing system 300 may communicate with the application 315 through one or more intermediaries 316. These intermediaries 316 can serve various functions in the licensing process. For example, the intermediaries 316 may add additional context information to the license request as the request passes through them. This additional context information can provide valuable data for the risk assessment process.

The intermediaries 316 may also sign the context information they add to the license request. This signing process allows the risk-based licensing system 300 to verify the source and integrity of the added information. The trust assessment module 310 can evaluate these signatures to determine the trustworthiness of the information provided by the intermediaries 316.

The licensing server 317 hosts the risk-based licensing system 300 and manages the overall licensing process. The licensing server 317 receives license requests from applications 315, either directly or through intermediaries 316. Upon receiving a request, the licensing server 317 initiates the context collection process using the context collection module 302.

The context collection module 302 gathers information from various sources. The device information collector 304 obtains data about the device running the application 315. The application configuration collector 306 retrieves configuration details from the application 315 itself. The environment information collector 308 gathers data about the surrounding network and software environment.

After collecting the context information, the licensing server 317 processes the request through the trust assessment module 310 and the risk assessment module 312. Based on the outcomes of these assessments, the license generation module 314 creates an appropriate license response.

The licensing server 317 then sends the license response back to the requesting application 315, potentially routing the response through the same intermediaries 316 that were involved in the initial request. This response may include a granted license with specific terms and conditions, or a denial of the license request.

The risk-based licensing system 300 can support various communication methods for interacting with external components. These methods may include network-based communications, user interface-based workflows, email-based systems, or physical media transfers. The flexibility in communication methods allows the risk-based licensing system 300 to adapt to different operational environments and requirements.

A number of implementations have been described. Nevertheless, it will be understood that various modifications may be made without departing from the spirit and scope of the disclosure. Accordingly, other implementations are within the scope of the following claims.

### LIST OF REFERENCES

100: method for processing a license request
102: step of receiving a license request
104: step of collecting context information related to the license request
106: step of assessing the trustworthiness of context data providers
108: step of performing a risk assessment based on collected context and trust evaluation
110: decision point for determining whether to grant the license
112: step of generating and tuning the license content if license is granted
114: step of generating a license denial response if license is not granted
116: step of encoding and signing the adjusted license content or denial response
118: step of returning the response to the requesting application
200: method for processing a license request
202: step of initiating a license request from an application
204: step of collecting device information
206: step of adding application configuration data to the request
208: step of including environment information in the request
210: step of signing the collected context information
212: decision point for determining whether there are intermediaries involved in the request process
214: step of adding and signing intermediary context information if intermediaries are present
216: step of sending the request with all collected context to the licensing server
300: risk-based licensing system
302: context collection module
304: device information collector
306: application configuration collector
308: environment information collector
310: trust assessment module
312: risk assessment module
314: license generation module
315: application requesting license
316: intermediaries involved in license request process
317: licensing server hosting the risk-based licensing system

## Claims

1. A computer-implemented method [100] for risk-based software licensing, comprising:
receiving a license request [102] from an application [315];
collecting context information [104] related to the license request, wherein the context information includes device information, application configuration data, and environment information; assessing trustworthiness [106] of context data providers;
performing a risk assessment [108] based on the collected context information and trust assessment;
determining whether to grant the license [110] based on the risk assessment;
generating and tuning license content [112] if the license is granted, or generating a license denial response [114] if the license is not granted;
encoding and signing [116] the adjusted license content or denial response; and
returning the response [118] to the requesting application [315].

2. The computer-implemented method [100] of claim 1, wherein collecting context information [104] comprises:
collecting device information [204] using a device information collector [304];
collecting application configuration data [206] using an application configuration collector [306]; and
collecting environment information [208] using an environment information collector [308].

3. The computer-implemented method [100] of claim 2, further comprising:
digitally signing [210] the collected context information.

4. The computer-implemented method [100] of one of the preceding claims, further comprising:
determining whether intermediaries [316] are involved in the license request process [212]; and
if intermediaries [316] are present, adding and signing intermediary context information [214].

5. The computer-implemented method [100] of claim 1, wherein assessing trustworthiness [106] of context data providers comprises:
evaluating digital signatures associated with each piece of context information; and
determining a trustworthiness level for each context data provider based on the evaluation.

6. The computer-implemented method [100] of claim 1, wherein performing the risk assessment [108] comprises:
analyzing the collected context information and trust assessment using a risk assessment module [312]; and
generating a risk score based on the analysis.

7. The computer-implemented method [100] of claim 6, wherein generating and tuning license content [112] comprises:
adjusting at least one of: license expiration time, optional feature licenses, or license behavior parameters based on the generated risk score.

8. A risk-based licensing system [300], comprising:
a context collection module [302] configured to collect context information related to a license request, the context collection module [302] including:
a device information collector [304];
an application configuration collector [306]; and
an environment information collector [308];
a trust assessment module [310] configured to assess trustworthiness of context data providers;
a risk assessment module [312] configured to perform a risk assessment based on the collected context information and trust assessment; and
a license generation module [314] configured to generate and tune license content based on the risk assessment.

9. The risk-based licensing system [300] of claim 8, wherein the context collection module [302] is further configured to digitally sign the collected context information.

10. The risk-based licensing system [300] of claim 9, wherein the trust assessment module [310] is configured to:
evaluate digital signatures associated with each piece of context information; and
determine a trustworthiness level for each context data provider based on the evaluation.

11. The risk-based licensing system [300] of claim 10, wherein the risk assessment module [312] is configured to:
analyze the collected context information and trust assessment; and
generate a risk score based on the analysis.

12. The risk-based licensing system [300] of claim 11, wherein the license generation module [314] is configured to adjust at least one of: license expiration time, optional feature licenses, or license behavior parameters based on the generated risk score.

13. The risk-based licensing system [300] of claim 8, further comprising:
a licensing server [317] configured to host the risk-based licensing system [300]; and
one or more intermediaries [316] configured to facilitate communication between the licensing server [317] and an application [315] requesting a license.

14. The risk-based licensing system [300] of claim 13, wherein the one or more intermediaries [316] are configured to add and sign additional context information to the license request.

15. A computer-implemented method [200] for processing a software license request, comprising:
initiating a license request [202] from an application [315];
collecting device information [204] related to the license request;
adding application configuration data [206] to the request;
including environment information [208] in the request;
signing the collected context information [210];
determining whether intermediaries [316] are involved in the request process [212];
if intermediaries [316] are present, adding and signing intermediary context information [214];
and
sending the request with all collected context [216] to a licensing server [317].

16. The computer-implemented method [200] of claim 15, wherein collecting device information [204] comprises:
gathering hardware specifications of a device running the application [315]; and
identifying security features present on the device.

17. The computer-implemented method [200] of claim 15, wherein adding application configuration data [206] comprises:
determining version information of the application [315]; and
identifying specific features or modules of the application [315] that require licensing.

18. The computer-implemented method [200] of claim 15, wherein including environment information [208] comprises:
identifying network characteristics of the environment in which the application [315] is running;
and
determining the presence of other licensed applications in the same environment.

19. The computer-implemented method [200] of claim 18, wherein identifying network characteristics comprises:
determining network security protocols in use; and
identifying the type of network connection (e.g., wired, wireless, cellular).

20. The computer-implemented method [200] of claim 19, further comprising:
assigning a trust score to the collected context information [210] based on the identified network characteristics and security features of the device.

21. A computer program product for performing the steps according to the features of any one of claims 1 to 8 or 15 to 20.
